Europäisches Patentamt

European Patent Office

Office européen des brevets

(19)

(11) **EP 1 111 484 A2**

(12) **EUROPEAN PATENT APPLICATION**

(43) Date of publication:
**27.06.2001 Bulletin 2001/26**

(51) Int Cl.$^7$: **G05B 19/042**

(21) Application number: **00122687.7**

(22) Date of filing: **18.10.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **26.10.1999 IT TO990925**

(71) Applicant: **Fluido Sistem S.R.L.**
**10146 Torino (TO) (IT)**

(72) Inventor: **Zangirolami, Marco**
**10146 Torino TO (IT)**

(74) Representative: **Garavelli, Paolo**
**A.BRE.MAR. S.R.L.,**
**Via Servais 27**
**10146 Torino (IT)**

(54) **Integrated control device for industrial automations**

(57)     An integrated control device (1) for industrial automations is disclosed, comprising: a managing microprocessor (3); an interface towards the outside connected to the microprocessor (3); input means (7) adapted to receive input signals and to send them to the microprocessor (3) to process them and produce corresponding controls; control means (9) connected to the microprocessor (3) to control output loads according to the input signals; and emergency controlling and managing means (11) adapted to disable the control device (1) should anomalous operating events occur.

Fig. 1

EP 1 111 484 A2

**Description**

The present invention refers to an integrated control device for industrial automations.

In the field of industrial automations, in order to control solenoid valves and motors, or more generally electric, pneumatic and hydraulic circuits, nowadays complex wirings are required that are difficult to realise and maintain, given the often simultaneous presence of a high number of members to be controlled.

Moreover, the current systems, in order to solve the problem of the complexity of control logics and wiring, are supported by arrangements of the central intelligence type (P.L.C. or personal computers) and of the controlled distribution networks type (that is, control distribution panels that are controlled or read through a differentlyconfigured serial port, such as for example RS232, RS485, field bus, etc.).

This results, particularly for the most simple machines, in a high minimum system cost (personal computer, or P.L.C.), in a complex programming requiring specialised technicians, and in the cost for the distribution panels. If one is not willing to pay for these system costs and times (taking into account that the times for one of the above arrangements, including procurement of materials, programming and installation, are typically on the order of several weeks), a traditional relay-based system must be chosen, that is less reliable, costly, but above all rigid as regards its reconfiguration.

Object of the present invention is solving the above prior-art problems by providing a flexible, intelligent device with a simple configuration that solves any wiring problem in electric, pneumatic and hydraulic circuits, using a single member of the multi-socket unit type with immediate and reliable connections, without requiring the use of a P.L.C. to execute the working cycles. The cost for the above system will be comparable to the one of the current distribution panels, and the programming will be able to be graphically performed in a Windows® environment with any personal computer equipped with a communication port (for example RS232), in very few minutes by any user (very few training minutes are quite enough).

Therefore, a further object of the present invention is providing a device that can be remotely programmed, for example through a personal computer, and therefore is able to stand-alone operate once having been set, with a drastic reduction of preparation time and related costs.

The above and other objects and advantages of the invention, as will appear from the following description, are obtained by a control device as claimed in Claim 1. Preferred embodiments and nontrivial variations of the present invention are claimed in the dependent Claims.

The present invention will be better described by some preferred embodiments thereof, given as a non-limiting example, with reference to the enclosed drawings, in which:

- Figure 1 is a schematic top view of an embodiment of the control device according to the present invention; and
- Figure 2 is an electric diagram of part of the circuits of the device of the invention, showing in particular the innovative connections and components of the emergency controlling and managing stage.

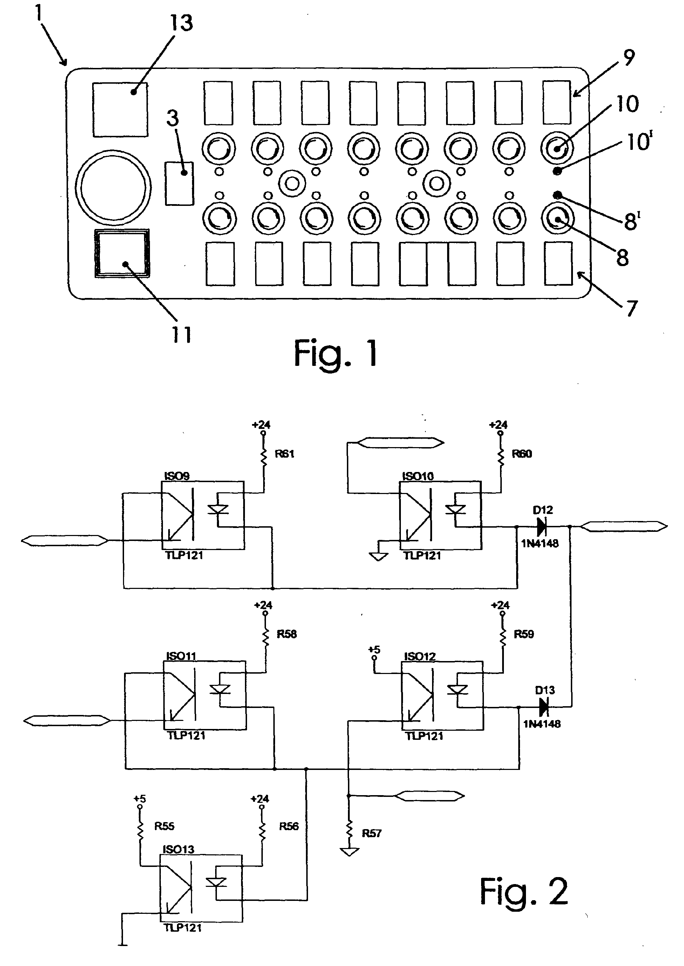

With reference to Fig. 1, a preferred embodiment of the control device 1 of the present invention is shown in a top view thereof. According to Fig. 1, the integrated control device 1 for industrial automations of the invention is realised externally in an arrangement of the "intelligent multi-socket unit" type, with M8x1 quick connections. The device 1 substantially comprises a managing microprocessor 3, that is the central processing core, and that can be directly programmed in a factory, or, in the most preferable way, connected to external processing means (not shown), such as a personal computer and the like, in order to receive therefrom the control program established according to the application. In such a way, the user previously prepares, through a suitable software on the external personal computer, the desired program according to the application, and then transmits it to the microprocessor 3 for the direct control of the output automated units. For example, according to the currently-preferred embodiment, the control device 1 of the invention is able to allow programming the working cycle in 16 steps managing a maximum number of 8 input signals, 8 output signals and/or working and wait times.

In order to allow the communication with external processing means, the device 1 is further equipped with an interface towards the outside (not shown), operatively connected to the microprocessor 3 and adapted to be connected to the personal computer to receive the pre-established programs.

The device 1 is further equipped with input means 7 adapted to receive a plurality of input signals and to send them to the microprocessor 3 so that it processes them and produces corresponding controls thereto. The input means 7 are composed of a plurality of connectors 8 operatively coupled to as many light sources 8' to show the presence/absence of the signal. The light sources 8' are commonly of the Light Emitting Diode (LED) type with a red or green colour. The input means 7 are preferably in a number that is a multiple of eight and the input signals come from external devices such as limit switches, NPN sensors, PNP sensors, magnetic REED relays, push-buttons, etc.

The device 1 further comprises control means 9 connected to the microprocessor 3 in order to control a plurality of output loads according to the input signals received from the input means 7. The control means 9 are also composed of a plurality of connectors 10 operatively coupled to as many light sources 10' to show the presence/absence of the signal. The light sources 10' are also commonly of the LED type with a red or green colour. The control means 9 are also adapted to control a maximum number of output loads equal to eight or a multiple of eight, where such loads are commonly composed of solenoid valves or 12/24V motors.

The fact that the preferred input/output devices are multiple of eight does not prevent them from being used only partly, and therefore to realise any desired number of connections.

Finally, the device 1 comprises emergency controlling and managing means 11 adapted to disable the control device 1 should anomalous operating events occur, such as for example disabling the circuit when there is no supply current, the need of a manual control to restore the device 1 operation in case of interruptions, making a new automatic startup impossible, etc.

The emergency controlling and managing means 11 are realised with solid state components with a logics that is wired through optoinsulators (and not through less reliable relays), according to the innovative electric connection diagram shown in Fig. 2.

In spite of the fact that the control device 1 of the invention is provided for the management of a maximum number of 8 inputs and 8 outputs with 16 independent working steps in this embodiment, the above numbers can obviously change. Moreover, the device 1 is designed in such a way as to be adapted to be connected to at least one other control device 1 of the same type for the reception of an unlimited number of input signals and the control of an unlimited number of output loads, since there are no limits to extending the modules.

In order to make operations easier, the device 1 further comprises display means 13 for possible necessary values with numbers or letters. Typically, these display means 13 show the program step in hexadecimal values (0, 1, 2, 3, 4, 5, 6, 7, 8, 9, A, B, C, D, E, F), the programming mode (P), the reset condition induced through hardware ($\bar{r}$) or software (r), the decimal point flashing to show the end-of-cycle and the transmission to a possible following unit of the "carry-out" (CI) signal for managing many units.

The operation of the control device 1 according to the present invention will now be described.

The device 1 allows the complete management of a working island up to a maximum of 8 drives, but as already stated it is always possible to connect in cascade many devices 1 to obtain a higher number of program steps or actuatable solenoid valves. Through a suitable programming software, it is possible, via a personal computer with serial socket, to realise the working sequence: the user connects, through a multipole connector, the necessary supply and signals for its own application, where for every single step 2 wait times can be set (commonly 0-25 sec, with a 0.1-sec resolution) in order to time the different operating phases. Once having ended the program, that requires just a few minutes of a simple processing, the process can be verified step by step through a computer simulation. By connecting the device 1 of the invention to the personal computer serial port, it is possible to read and/or write the program contained therein. The therebyprogrammed multi-socket unit is ready for working and can be installed on the tool and made operating in a quick, accurate, reliable and repetitive way. Through a portable personal computer, it is always possible to modify the program *in situ* in a few seconds without having to dissassemble the unit. The device 1 can be reprogrammed for a very high number of times, that nowadays reaches 100,000 times. The execution of working cycles without any connection to P.L.C.s is thereby allowed, with very high cost savings.

## Claims

1. Integrated control device (1) for industrial automations, characterised in that it comprises:

   - a managing microprocessor (3);
   - an interface towards the outside, said interface being connected to said microprocessor (3);
   - input means (7) adapted to receive a plurality of input signals, said input means (7) sending said input signals to said microprocessor (3) to process them and produce corresponding controls;
   - control means (9) connected to said microprocessor (3) to control a plurality of output loads according to the input signals received by said input means (7); and
   - emergency controlling and managing means (11) adapted to disable the control device (1) should anomalous operating events occur.

2. Control device (1) according to Claim 1, characterised in that the plurality of input signals received by said input means (7) are a number that is a multiple of eight.

3. Control device (1) according to Claim 2, characterised in that said input signals come from external devices such as limit switches, NPN sensors, PNP sensors, magnetic REED relays and push-buttons.

4. Control device (1) according to Claim 1, characterised in that said plurality of output loads is a number that is a multiple of eight.

5. Control device (1) according to Claim 4, characterised in that said output loads are composed of solenoid valves.

6. Control device (1) according to Claim 4,

characterised in that said output loads are composed of 12/24V motors.

7. Control device (1) according to Claim 1, characterised in that said managing microprocessor (3) is adapted to be connected to external processing means to receive managing programs therefrom.

8. Control device (1) according to Claim 1, characterised in that said emergency controlling and managing means (11) are realised with solid state components with a logics wired through optoinsulators.

9. Control device (1) according to any one of the previous Claims, characterised in that it is adapted to be connected to at least another control device (1) of the same type for the reception of an unlimited number of input signals and the control of an unlimited number of output loads.

Fig. 1

Fig. 2